# EUROPÄISCHE PATENTSCHRIFT

(11) **EP 1 971 793 B1**
(45) Veröffentlichungstag und Bekanntmachung des Hinweises auf die Patenterteilung: **13.04.2011**
(21) Anmeldenummer: 06829683.9
(22) Anmeldetag: 16.12.2006
(51) Int. Cl.: F16F 9/38

(54) **SCHWINGUNGSDÄMPFER MIT EINEM STEINSCHLAGSCHUTZ**
VIBRATION DAMPER COMPRISING A PROTECTION AGAINST STONES
AMORTISSEUR DE VIBRATIONS DOTE D'UN ELEMENT ANTI-GRAVILLONS

(30) Priorität: 09.01.2006 DE 102006001305
(43) Veröffentlichungstag der Anmeldung: 24.09.2008
(73) Patentinhaber: ZF Friedrichshafen AG, 88046 Friedrichshafen (DE)
(72) Erfinder: HANDKE, Günther, 97502 Euerbach (DE)
(86) Internationale Anmeldenummer: PCT/EP2006/012159
(87) Internationale Veröffentlichungsnummer: WO 2007/079911

(56) Entgegenhaltungen:
- DE-A1-102004 014 250
- US-A- 3 907 080

## Beschreibung

### Technisches Gebiet

Die Erfindung betrifft einen Schwingungsdämpfer mit einem Steinschlagschutz gemäß dem Oberbegriff von Patentanspruch 1.

### Stand der Technik

Aus der DE 10 2004 014 250 A1 ist ein Schwingungsdämpfer mit einem Steinschlagschutz bekannt. Der Steinschlagschutz wird von einem Rohrteil gebildet, das axial auf einem Zylinder des Schwingungsdämpfers fixiert ist. Ein Boden des Schwingungsdämpfers verfügt über einen Durchmesservergrößerung, auf der sich das Rohrteil axial abstützt.

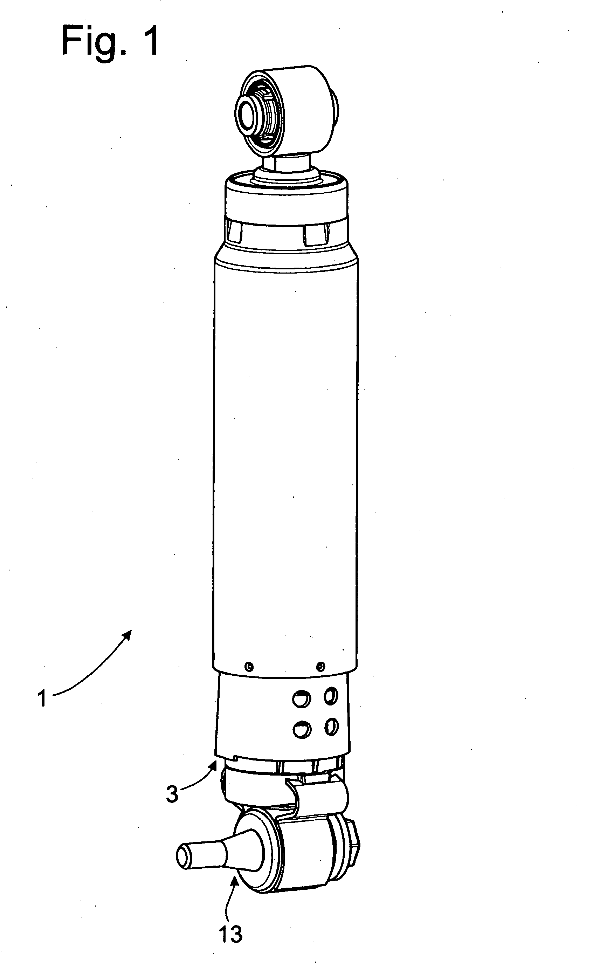

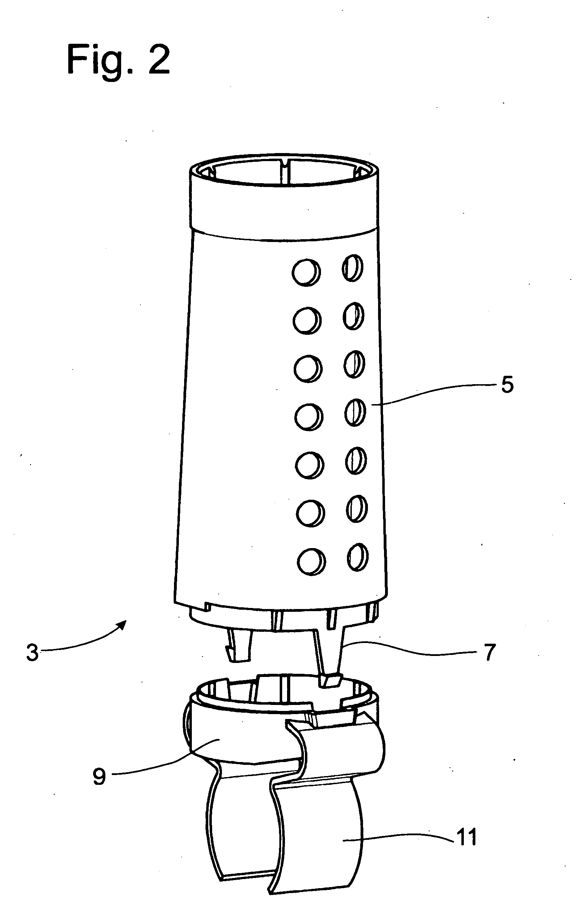

Aus dem Fahrzeug "Ford Falcon UTE" und "Ford Falcon RTV" ist ein Schwingungsdämpfer bekannt, der einen Steinschlagschutz gemäß den Fig. 1 und 2 aufweist. Das Rohrteil aus Kunststoff verfügt endseitig über zwei axial verlaufende Schnapphaken, die mit einem Ringträger eine Rastverbindung eingehen. An dem Ringträger sind zwei gekrümmte Haltezungen angeordnet, die ein bodenseitiges Anschlussauge des Schwingungsdämpfers zumindest teilweise umfassen und damit eine axiale und in Umfangsrichtung wirksame Fixierung des Rohrteils bewirken.

Der Nachteil der Erfindung besteht darin, dass sowohl für das Rohrteil wie auch für den Ringträger relativ komplizierte Spritzwerkzeuge notwendig sind, da an beiden Bauteilen Hinterschneidung vorliegen, die die Entformung erschweren. Des Weiteren muss für jede gewünschte Anschlussaugenbreite dieses komplizierte Spritzwerkzeug angefertigt werden. Weicht z. B. die Bodenkontur des Schwingungsdämpfers von einer konventionellen Ausgestaltung ab, dann muss ebenfalls ein zusätzliches Spritzwerkzeug erstellt werden.

### Darstellung der Erfindung

Aufgabe der vorliegenden Erfindung ist es, einen Steinschlagschutz derart weiterzuentwickeln, dass die aus dem Stand der Technik bekannten Probleme hinsichtlich der Anpassung an verschiedene Schwingungsdämpfertypen kostengünstiger ausfallen.

Erfindungsgemäß wird die Aufgabe dadurch gelöst, dass jede Haltezunge ein separates Bauteil darstellt und Rastmittel aufweist, die mit dem Rohrteil die Rastverbindung eingehen.

Aufgrund der Einzelbauweise der Haltezungen können deutlich einfachere Spritzwerkzeuge für die Herstellung der Haltezungen verwenden werden. Varianten für verschiedene Schwingungsdämpferbauformen lassen sich kostengünstiger erstellen.

Gemäß einem vorteilhaften Unteranspruch weisen die Haltezungen endseitig mindestens einen Schnapphaken auf, der in eine Aufnahme des Rohrteils eingreift.

In weiterer vorteilhafter Ausgestaltung weist die Haltezunge eine Mehrzahl von Schnapphaken auf, die durch einen axial verlaufenden Schlitz voneinander getrennt sind. Die Verdrehsicherheit der Haltezunge zum Rohrteil wird dadurch entscheidend verbessert.

Die Schnapphaken sind auf einem Teilkreis in einer Winkelstellung zueinander angeordnet und benötigen deshalb einen vergleichsweise kleinen radialen Bauraum.

Zur Vermeidung von Hinterschneidungen am Rohrteil wird die Aufnahme im Rohrteil von einer Nut gebildet, die durch einen konzentrisch zum Rohrteil verlaufenden Rahmen begrenzt wird. Diese besondere Form der Aufnahme ermöglicht eine besonders einfache Entformung des Rohrteils.

### Kurze Beschreibung der Zeichnungen

Anhand der folgenden Figurenbeschreibung soll die Erfindung näher erläutert werden.

Es zeigt:
- Fig. 1: Schwingungsdämpfer, Stand der Technik
- Fig. 2: Steinschlagschutz zu Fig. 1
- Fig. 3 u. 4: Schwingungsdämpfer mit erfindungsgemäßem Steinschlagschutz
- Fig. 5: Steinschlagschutz zu den Fig. 3 und 4
- Fig. 6: Rohrteil des Steinschlagschutzes von Fig. 5
- Fig. 7-9: Haltezungen des Steinschlagschutzes von Fig. 5

### Wege zur Ausführung der Erfindung

Die Fig. 1 zeigt einen Schwingungsdämpfer 1 mit einem Steinschlagschutz 3 nach Fig. 2, wie er aus dem Stand der Technik bekannt ist. Der Steinschlagschutz 3 umfasst ein Rohrteil 5, das endseitig Schnapphaken 7a 7b aufweist. An einem Ringträger 9 sind gegenüberliegend zwei Haltezungen angeordnet, die ein Anschlussauge 13 zumindest teilweise umgreifen und damit den gesamten Steinschlagschutz tragen. Der Ringträger schützt mit den Haltezungen auch das Anschlagauge vor Steinschlag.

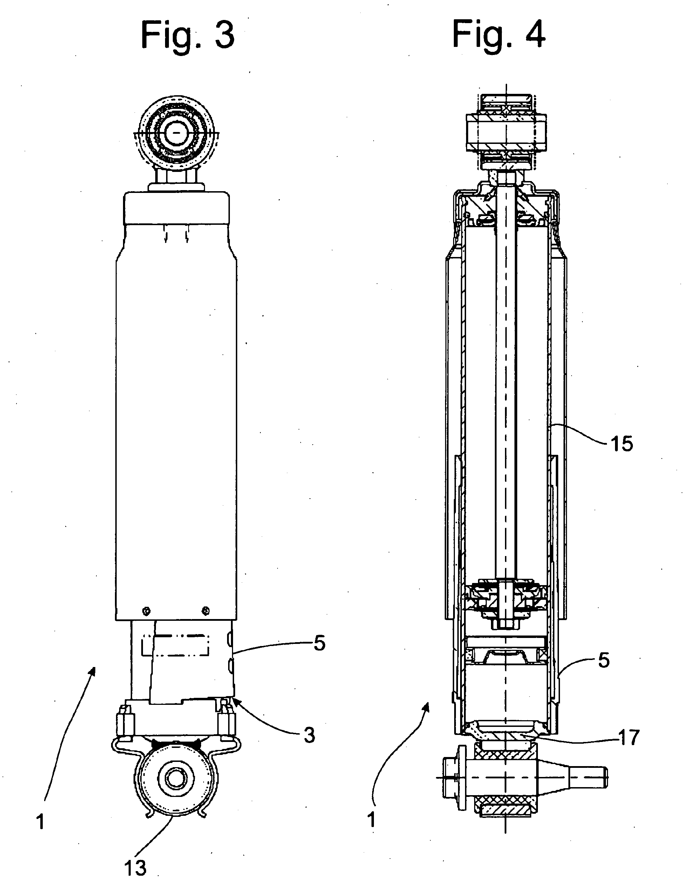

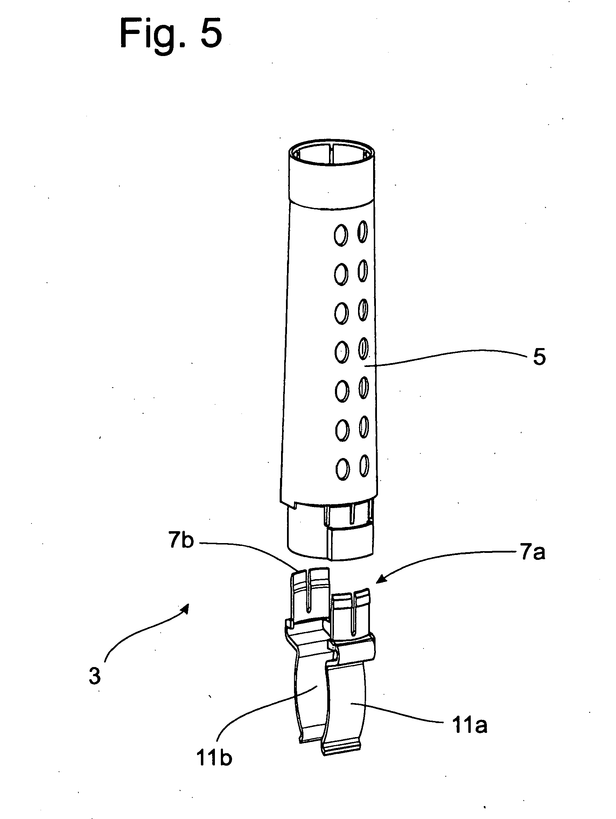

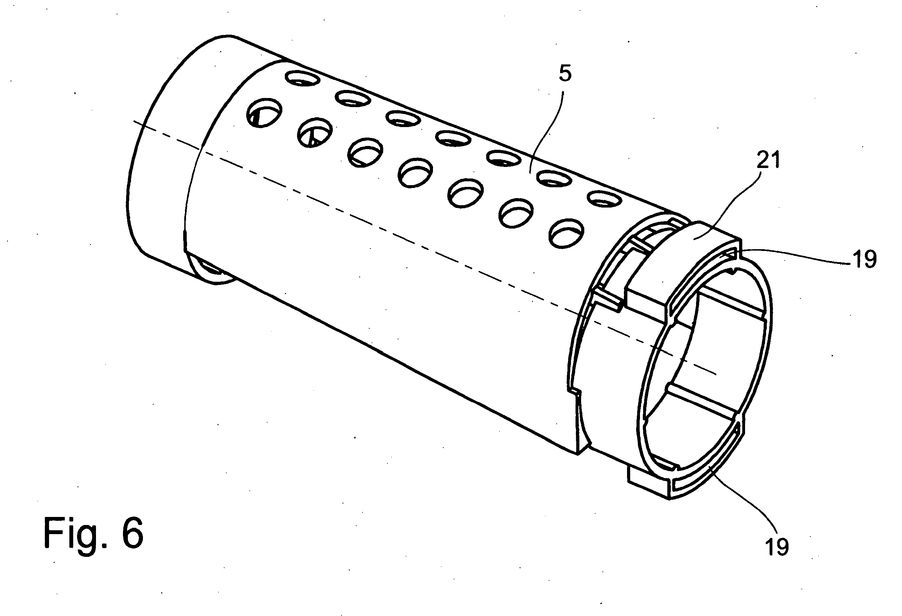

In den Fig. 3 und 4 kommt ein erfindungsgemäßer Steinschlagschutz zur Anwendung, der, wie die Fig. 5 zeigt, ebenfalls ein Rohrteil 5 aufweist, das einen Zylinder 15 des Schwingungsdämpfers 1 ausgehend von einem Boden 17 abdeckt. Das Rohrteil 5 verfügt, wie in der Fig. 6 ersichtlich ist, an dem in Richtung des Bodens weisenden Ende über zwei Aufnahmen 19, die als Nut ausgebildet sind und durch einen konzentrisch zum Rohrteil verlaufenden Rahmen 21 begrenzt werden. Das Rohrteil besteht bevorzugt aus einem Kunststoff und wird in einem Spritzverfahren hergestellt.

Aus der Fig. 5 ist weiter erkennbar, dass zwei Haltezungen 11 a; 11 b als separate Bauteile verwendet werden, die mit dem Rohrteil 5 über Schnapphaken 7a; 7b eine Rastverbindung eingehen, wobei die Schnapphaken 7a; 7b in die Aufnahme 19 des Rohrteils 5 eingreifen.

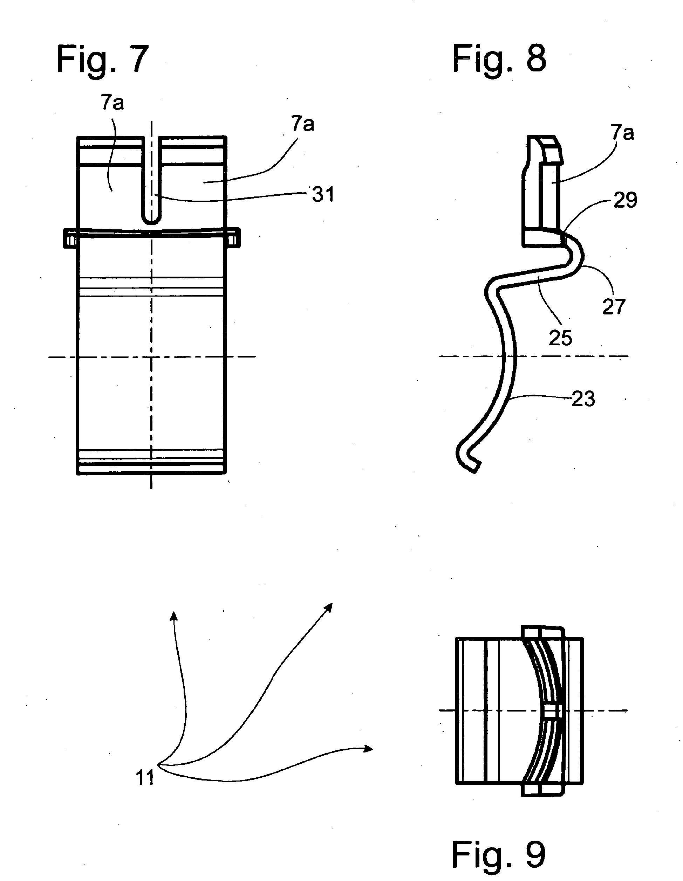

In den Fig. 7 bis 9 zeigen eine Haltezunge 11 a; 11 b als Einzelteil. Die Haltezunge verfügt über einen gekrümmten Stützabschnitt 23, der außenseitig auf dem Anschlussauge 13 (Fig. 3) aufliegt. Es schließt sich ein radial verlaufendes Teilstück 25 mit einem Übergangsbogen 27 zu einer radialen Tragfläche 29 an, von der aus sich in Längsrichtung des Rohrteils zwei Schnapphaken 7a erstrecken, die durch einen axial verlaufenden Schlitz 31 voneinander getrennt sind. Insbesondere aus der Fig. 9 geht hervor, dass die Schnapphaken auf einem Teilkreis in einer Winkelstellung zueinander angeordnet sind. Die Haltezunge lässt sich, wie die Fig. 8 zeigt, sehr einfach spritztechnisch herstellen, da die Teilungsfuge senkrecht zur Ebene der Fig. 8 z. B. der Innenkontur entsprechend verlaufen kann und folglich keine Hinterschneidungen vorliegen.

Die Montage der Haltezungen 11a; 11 b kann mit der Fig. 5 nachvollzogen werden. Der Steinschlagschutz 3 wird unabhängig vom Schwingungsdämpfer in einer Vorrichtung montiert, indem jede Haltezungen 11 a; 11 b von unten dem Rohrteil 5 zugeführt wird, bis die Schnapphaken 7a; 7b die Nut 19 durchgriffen haben und das Rohrteil 5 auf der Tragfläche 29 der Haltezungen 11a; 11 b zur Anlage kommt. Der gesamte Steinschlagschutz 3 wird dann über das kolbenstangenaustrittseitige Ende auf den Zylinder 15 gefädelt, bis die gekrümmten Stützabschnitte 23 das Anschlussauge 13 umgreifen.

## Patentansprüche

1. Schwingungsdämpfer (1) mit einem Zylinder (15), zu dem ein Steinschlagschutz (3) in der Bauform eines Rohrteils (5) ortsfest angeordnet ist, wobei sich das Rohrteil (5) über Haltezungen (11a: 11b) an einem Anschlussorgan (13) abstützt, in dem die Haltezungen (11a; 11 b) über mindestens eine Rastverbindung mit dem Rohrteil (5) in Wirkverbindung stehen,
**dadurch gekennzeichnet,**
**dass** jede Haltezunge (11 a; 11 b) ein separates Bauteil darstellt und Rastmittel (7a; 7b) aufweist, die mit dem Rohrteil (5) die Rastverbindung eingehen.

2. Schwingungsdämpfer nach Anspruch 1,
**dadurch gekennzeichnet,**
**dass** die Haltezunge (11a; 11 b) endseitig mindestens einen Schnapphaken (7a; 7b) aufweist, der in eine Aufnahme (19) des Rohrteils (5) eingreift.

3. Schwingungsdämpfer nach Anspruch 2,
**dadurch gekennzeichnet,**
**dass** die Haltezunge (11a; 11 b) eine Mehrzahl von Schnapphaken (7a; 7b) aufweist, die durch einen axial verlaufenden Schlitz (31) voneinander getrennt sind

4. Schwingungsdämpfer nach Anspruch 3,
**dadurch gekennzeichnet,**
**dass** die Schnapphaken (7a; 7b) auf einem Teilkreis in einer Winkelstellung zueinander angeordnet sind.

5. Schwingungsdämpfer nach Anspruch 1,
**dadurch gekennzeichnet,**
**dass** die Aufnahme (19) im Rohrteil (5) von einer Nut gebildet wird, die durch einen konzentrisch zum Rohrteil (5) verlaufenden Rahmen (21) begrenzt wird.

## Claims

1. Vibration damper (1) with a cylinder (15), in relation to which stone impact protection (3) in the form of construction of a tubular part (5) is arranged at a fixed location, the tubular part (5) being supported via holding tongues (11a; 11b) on a connecting member (13) in which the holding tongues (11a; 11b) are operatively connected to the tubular part (5) via at least one latching connection, **characterized in that** each holding tongue (11a; 11b) constitutes a separate component and has latching means (7a; 7b) which make the latching connection with the tubular part (5).

2. Vibration damper according to Claim 1, **characterized in that** the holding tongue (11a; 11b) has on the end face at least one snap hook (7a; 7b) which engages into a receptacle (19) of the tubular part (5).

3. Vibration damper according to Claim 2, **characterized in that** the holding tongue (11a; 11b) has a plurality of snap hooks (7a; 7b) which are separated from one another by an axially running slot (31).

4. Vibration damper according to Claim 3, **characterized in that** the snap hooks (7a; 7b) are arranged in an angular position with respect to one another on a part-circle.

5. Vibration damper according to Claim 1, **characterized in that** the receptacle (19) in the tubular part (5) is formed by a groove which is delimited by a frame (21) running concentrically with respect to the tubular part (5).

## Revendications

1. Amortisseur de vibrations (1) comprenant un cylindre (15), par rapport auquel est disposée fixement une protection anti-gravillons (3) en forme de pièce tubulaire (5), la pièce tubulaire (5) s'appuyant par le biais de langues de fixation (11a; 11b) contre un organe de raccordement (13), les langues de fixation (11a; 11b) étant en liaison fonctionnelle par le biais d'au moins une connexion par encliquetage avec la pièce tubulaire (5),
**caractérisé en ce que**
chaque langue de fixation (11a ; 11b) constitue un composant séparé et présente des moyens d'encliquetage (7a ; 7b) qui constituent la connexion par encliquetage avec la pièce tubulaire (5).

2. Amortisseur de vibrations selon la revendication 1,
**caractérisé en ce que**
la langue de fixation (11a ; 11b) présente du côté de l'extrémité au moins un crochet d'encliquetage (7a ; 7b) qui vient en prise dans un logement (19) de la pièce tubulaire (5).

3. Amortisseur de vibrations selon la revendication 2,
**caractérisé en ce que**
la langue de fixation (11a ; 11b) présente une pluralité de crochets d'encliquetage (7a ; 7b) qui sont séparés les uns des autres par une fente s'étendant axialement (31).

4. Amortisseur de vibrations selon la revendication 3,
**caractérisé en ce que**
les crochets d'encliquetage (7a ; 7b) sont disposés sur un cercle partiel suivant une position angulaire les uns par rapport aux autres.

5. Amortisseur de vibrations selon la revendication 1,
**caractérisé en ce que**
le logement (19) dans la pièce tubulaire (5) est formé par une rainure, qui est limitée par un cadre (21) s'étendant concentriquement par rapport à la pièce tubulaire (5).
